# EUROPEAN PATENT SPECIFICATION

(11) **EP 0 543 410 B1**
(45) Date of publication and mention of the grant of the patent: **08.05.1996**
(21) Application number: 92119829.7
(22) Date of filing: 20.11.1992
(51) Int. Cl.: C08G 77/24

(54) **Fluorosilicone resin and method for preparing same**
Fluorsilikonharz und Verfahren zur Herstellung
Résine de fluorosiloxane et procédé de préparation

(30) Priority: 21.11.1991 JP 332521/91
(43) Date of publication of application: 26.05.1993
(73) Proprietor: Dow Corning Toray Silicone Company, Limited, Tokyo 103 (JP)
(72) Inventor: Kobayashi, Hideki, Main Off. for Res. and Dev., Kaigan, Ichihara-shi, Chiba Pref. (JP); Nishiumi, Wataru, Main Off. for Res. and Dev., Kaigan, Ichihara-shi, Chiba Pref. (JP)
(74) Representative: Spott, Gottfried, Dr.

(56) References cited:
- EP-A- 0 179 488
- EP-A- 0 180 160
- EP-A- 0 471 324
- US-A- 4 024 306

## Description

The present invention relates to a fluorosilicone resin. More particularly, this invention relates to a fluorosilicone resin containina trifunctional and tetrafunctional siloxane units.

Silicone resins composed of trifunctional units (RSiO_{3/2} unit) and difunctional units (R₂SiO_{2/2} unit) are not new, nor are methods for their preparation. For example, United States patent nos. 3,790,527, which issued on February 5, 1974; 3,846,358, which issued on November 5, 1974 and 4,056,492, which issued on November 1, 1977 describe preparing of silicone resin by the cohydrolysis of mixtures of at least one organotrichlorosilane and at least one diorganodichlorosilane in the presence of water and acetone. However, these patents do not mention fluorosilicone resins.

One objective of the present invention is to provide a novel class of thermoplastic fluorosilicone resins composed of trifunctional trifluoropropylsiloxane units and tetrafunctional units represented by SiO_{4/2}. A second objective of this invention is to provide a method for preparing these novel thermoplastic fluorosilicone resins.

The present invention relates to thermoplastic fluorosilicone resin exhibiting a softening point of from 50°C to 250°C and represented by the average formulae

(1) (CF₃CH₂CH₂SiO_{3/2})ₙ(SiO_{4/2})ₘ

wherein n is a number with a value of at least 0.6 but less than 1, m is a number with a value greater than zero, and n + m = 1.
When n is less than 0.6, the fluorosilicone resin is a solid, but lacks a softening point. While m must be a number greater than zero, values of 0.05 to 0.4 are preferred.

The fluorosilicone resins of the present invention are solids at room temperature, are thermoplastic, and exhibit softening temperatures within the range of from 50°C to 250°C. The resins are soluble in ethers such as diethyl ether and tetrahydrofuran and ketones such as acetone and methyl isobutyl ketone, but are insoluble in aromatic solvents such as benzene and toluene and alkanes such as hexane and heptane.

The fluorosilicone resins of the present invention are prepared by the following sequence of steps;
(1) a silane of general formula CF₃CH₂CH₂SiX₃ (a) and a silane of the general formula SiX₄ (b) are cohydrolyzed in the presence of an organic solvent and an aqueous acid solution. In these formulae X represents a halogen atom such as chlorine or bromine or an alkoxy group such as methoxy, ethoxy, propoxy, or butoxy;
(2) the resultant fluorosilicone resin solution is subjected to a water wash, neutralization and removal of water, followed by a heat induced dehydration in the presence of alkali metal catalyst, a second water wash, and a final neutralization.

The following specific techniques are examples of those suitable for cohydrolyzing silanes corresponding to general formulae (a) and (b):
(i) a mixture of silanes (a) and (b) is dissolved in an organic solvent and this solution is dripped with stirring into an aqueous acid solution; or
(ii) the aqueous acid solution is dripped with stirring into a solution containing silanes (a) and (b).

The organic solvent preferably dissolves silanes (a) and (b) in addition to the fluorosilicone resin product formed by hydrolysis of these silanes. Preferred examples of such organic solvents include but are not limited to ethers such as diethyl ether and tetrahydrofuran and ketones such as acetone and methyl isobutyl ketone.

The concentrations of silanes (a) and (b) in the organic solvent should be selected to achieve a workable viscosity. These concentrations are typically adjusted to a value equivalent to from 10 to 80 weight% based on the combined weight of the final fluorosilicone resin and organic solvent.

Acids that can be present in the aqueous acid solution employed to hydrolyze the silanes include but are not limited to mineral acids such as sulfuric, nitric, and hydrochloric acids. Aqueous hydrochloric acid solutions are preferred. Using this preferred acid the hydrogen chloride concentration must be at least 5 weight%. Suitable temperatures during and following blending of the silanes and the aqueous acid solution are from 0°C to 120°C.

After cohydrolysis of silanes (a) and (b), an organic solvent or water is added as necessary or desired to the resulting fluorosilicone resin solution, and the resultant mixture is allowed to remain undisturbed to achieve separation into aqueous and organic solvent layers. The fluorosilicone resin-containing organic solvent layer is washed with water until it is neutral. Removal of the water present in the resin solution is also desirable. When water is not very soluble in the organic solvent, removal of the water can be accomplished by distilling off the water as an azeotropic mixture with the organic solvent using a water separator tube.

At this point in the process the fluorosilicone resin product contains a moderate concentration of residual silanol groups. These residual silanol groups are condensed with the generation of water as a by-product by heating the organic solvent solution of the fluorosilicone resin in the presence of an alkali metal catalyst. This condensation allows for adjustments in the molecular weight distribution of the fluorosilicone resin through re-equilibration, which affects properties such as the softening temperature of the final resin. Suitable alkali metal catalysts include but are not limited to alkali metal hydroxides such as potassium hydroxide, sodium hydroxide and cesium hydroxide, and by the alkali metal silanolates. Condensation of at least a portion of the residual silanol groups is preferred because it stabilizes the properties of the fluorosilicone resin.

The fluorosilicone resin of the present invention is obtained by neutralizing the alkali metal catalyst, washing of the resultant solution with water, removing the water, and finally removing of the organic solvent.

A second method for reducing the silanol group concentration comprises blocking or capping these groups by treating the fluorosilicone resin solution with an organosilicon compound, referred to hereinafter as (c), of the general formula (R₃Si)ₐY, where each R is individually selected from substituted or unsubstituted monovalent hydrocarbon radical containing from 1 to 8 carbon atoms; a is 1 or 2, with the proviso that when a is 1, Y is a hydrogen atom, halogen atom, hydroxyl group, alkoxy group, -NR'₂, -ONR'₂, or -OCOR', and when a is 2, Y is -O- or
- NR'- where R' is a hydrogen atom or alkyl radical.

Organosilicon compound (c) reacts readily with the silanol group. The monovalent hydrocarbon radical represented by R in the formula for organosilicon compound (c) contains from 1 to 8 carbon atoms. Suitable hydrocarbon radicals include but are not limited to alkyl radicals such as methyl, ethyl, propyl, pentyl and octyl; alkenyl radicals such as vinyl, allyl, and hexenyl; aryl radicals such as phenyl; and substituted hydrocarbon radicals such as 3,3,3-trifluoropropyl. R preferably represents methyl or 3,3,3-trifluoropropyl. The R substituent may be the same or different within a given organosilicon compound.

The alkyl radicals represented by R' include but are not limited to methyl, ethyl, propyl, butyl and pentyl.

The alkoxy groups and halogen atoms that can be represented by Y are the same as discussed for the X substituent of silanes (a) and (b).

Although the amount of organosilicon compound (c) used will depend on the quantity of residual silanol groups in the fluorosilicone resin, the addition of 10 to 20 weight parts per 100 weight parts of resin will typically suffice. Any excess organosilicon compound should be removed from the reaction mixture.

In practice, organosilicon compound (c) is added to the solution of the fluorosilicone resin, and heating is carried out as required to complete the reaction.

To isolate the final fluorosilicone resin of this invention, the resin solution resulting from the condensation reaction is washed with water until the water tests neutral, the water is removed as described in a preceding section of this specification, and. finally, the organic solvent is stripped off.

When organosilicon compound (c) is used to block the unreacted silanol groups, the fluorosilicone resin will contain small quantities of units not present in the preceding average formula (1) for the final resin, and this case is encompassed by the present invention. Moreover, the fluorosilicone resin with average unit formula (1) may contain small quantities of other constituent components as long as the object of the present invention is not compromised.

The fluorosilicone resin in accordance with the present invention is a solid thermoplastic material at room temperature that is insoluble in aromatic hydrocarbon solvents such as benzene and toluene, and aliphatic hydrocarbon solvents such as hexane and heptane. The resin can therefore be used in applications where such properties are critical. These applications include but are not limited to encapsulation films that must be solvent resistant, materials for forming protective silicone resin films and coatings, and as an additive for improving or modifying the physical properties of other organic resins.

### Examples

The following examples describe preferred resins and processes within the scope of the present invention, and should not be interpreted as limiting the scope of the invention as defined in the accompanying claims. Unless otherwise indicated all parts and percentages in these examples are by weight.

### Example 1

A mixture of 37.12 g (0.17 mol) of the alkoxysilane CF₃CH₂CH₂Si(OCH₃)₃ and 4.56 g (0.02 mol) of the alkoxysilane Si(OC₂H₅)₄ dissolved in 20.0 g methyl isobutyl ketone as organic solvent was dripped into a stirred mixture containing 12.0 g 36 weight% aqueous hydrochloric acid and 20.0 g methyl isobutyl ketone that was maintained at room temperature. Stirring was continued for an additional 2 hours following completion of the addition. 50 g methyl isobutyl ketone and 100 g water were then added followed by stirring for 5 minutes. After stirring was discontinued the reaction mixture was allowed to remain undisturbed and separated into 2 layers. The organic solvent layer (upper layer) was collected and washed onece with water. The organic solvent layer was combined with 100 g of a 4 weight % aqueous sodium bicarbonate solution and then stirred for 2 hours at the reflux temperature of the methyl isobutyl ketone. The organic solvent layer was isolated after cooling to room temperature and washed severa; times with water. The organic solvent layer was again collected and transferred to a flask equipped with a water separation tube. Removal of water was achieved by heating the mixture at the boiling point of the methyl isobutyl ketone. Removal of the solvent by evaporation yielded a fluorosilicone resin that was solid at room temperature (sample A).

Sample A was dissolved in methyl isobutyl ketone to form a 30 weight% solution. 0.04 g potassium hydroxide was added to the solution followed by heating for 6 hours at the boiling point in a flask equipped with a water separation tube. After cooling the reaction mixture, neutralization was carried out by the addition of acid. After washing with water, the organic solvent was completely removed by evaporation with heating, yielding a fluorosilicone resin that was solid at room temperature (sample B).

Samples A and B were soluble in tetrahydrofuran, acetone, and methyl isobutyl ketone, but were insoluble in benzene, toluene, hexane, and heptane. Both samples had softening points of 90°C.

Analytical results for samples A and B are reported below.

### sample A

⁹Si NMR delta (ppm):
- -71: (0.87 Si, br, CF₃CH₂CH₂SiO_{3/2})
- -100: (0.04 Si, br, ROSiO_{3/2})
- -110: (0.09 Si, br, SiO_{4/2})
(R = CH₃CH₂- and/or H-)

¹³C NMR delta (ppm):
- 130: (0.95 C. q, CF₃-)
- 59: (0.05 C, s, -OCH₂CH₃)
- 29: (0.90 C, s, CF₃CH₂-)
- 18: (0.04 C, s, -OCH₂CH₃)
- 5: (1.00 C, s, SiCH₂-)

GPC (gel permeation chromatography) Analysis
M_{w} (weight-average molecular weight) = 1.1 x 10⁴
Mₙ (number-average molecular weight) = 1.0 x 10⁴

Sample A was confirmed to be a compound that contained residual hydroxyl and ethoxy at its terminals and that had a chemical structure with the following average unit formula.

(CF₃CH₂CH₂SiO_{3/2})_{0.87}(SiO_{4/2})_{0.13}

### sample B

⁹Si NMR delta (ppm):
- -71: (0.86 Si, br, CF₃CH₂CH₂SiO_{3/2})
- -100: (0.02 Si, br, ROSiO_{3/2})
- -110: (0.12 Si, br, SiO_{4/2})
(R = CH₃CH₂- and/or H-)

¹³C NMR delta (ppm):
- 130: (1.05 C, q, CF₃-)
- 29: (1.00 C, s, CF₃CH₂-)
- 5: (1.00 C, s, SiCH₂-)

GPC (gel permeation chromatography) Results
M_{w} (weight-average molecular weight) = 9.6 x 10³
Mₙ (number-average molecular weight) = 8.4 x 10³

Sample B was confirmed to be a compound that contained residual hydroxyl at the terminal positions and was assigned the chemical structure

(CF₃CH₂CH₂SiO_{3/2})_{0.86}(SiO_{4/2})_{0.14}.

### Example 2

A fluorosilicone resin was prepared using the same method described in Example 1, but in the present case using 26.2 g (0.12 mol) of the alkoxysilane CF₃CH₂CH₂Si(OCH₃)₃ and 6.3 g (0.03 mol) of the alkoxysilane Si(OC₂H₅)₄ in place of the quantities used in Example 1. This resin was a white solid that had a softening point of 140°C.

The results of analysis of the fluorosilicone resin product are reported below.

⁹Si NMR delta (ppm):
- -71: (0.78 Si, br, CF₃CH₂CH₂SiO_{3/2})
- -100: (0.04 Si, br, ROSiO_{3/2})
- -110: (0.18 Si, br, SiO_{4/2})
(R = CH₃CH₂- and/or H-)

¹³C NMR delta (ppm):
- 130: (1.00 C, q, CF₃-)
- 59: (0.04 C, s, -OCH₂CH₃)
- 29: (0.95 C, s, CF₃CH₂-)
- 18: (0.05 C, s, -OCH₂CH₃)
- 5: (1.00 C, s, SiCH₂-)

GPC (gel permeation chromatography)
M_{w} (weight-average molecular weight) = 1.3 x 10⁴
Mₙ (number-average molecular weight) = 1.1 x 10⁴

This silicone resin product was confirmed to be a compound that contained residual hydroxyl and ethoxy at its terminals and had a chemical structure of the following average formula

(CF₃CH₂CH₂SiO_{3/2})_{0.78}(SiO_{4/2})_{0.22}.

### Example 3

A fluorosilicone resin was prepared by the same method as in Example 1, but in the present case replacing the alkoxysilane with formula CF₃CH₂CH₂Si(OCH₃)₃ used in Example 1 with 55.5 g (0.24 mol) of a chlorosilane with the formula CF₃CH₂CH₂SiCI₃. The final resin was a white solid with a softening point of 120°C.

The analytical results for this fluorosilicone resin product are reported below.

⁹Si NMR delta (ppm):
- -71: (br, CF₃CH₂CH₂SiO_{3/2})

¹³C NMR delta (ppm):
- 130: (0.90 C, q, CF₃-)
- 29: (0.85 C, s, CF₃CH₂-)
- 5: (1.00 C, s, -CH₂Si)

GPC (gel permeation chromatography)
M_{w} (weight-average molecular weight) = 6.2 x 10³
Mₙ (number-average molecular weight) = 6.1 x 10³

The final fluorosilicone resin was determined to have the average formula (CF₃CH₂CH₂SiO_{3/2})_{0.85}(SiO_{4/2})_{0.15}.

### Example 4

Sample A, obtained as described in Example 1, was dissolved in methyl isobutyl ketone at a concentration of 30 weight%. Hexamethyldisilazane was added in a quantity that corresponded to 15 weight% of the weight of sample A, and the reaction mixture was heated in a flask for 6 hours at the boiling point. After cooling, the reaction mixture was neutralized by the addition of acid and washed with water, and the solvent was completely evaporated by heating. The resultant fluorosilicone resin was a white solid at room temperature and had a softening point of 90°C.

GPC(gel permeation chromatography)
M_{w} (weight-average molecular weight) = 1.0 x 10⁴
Mₙ (number-average molecular weight) = 9.4 x 10³

## Claims

1. A thermoplastic fluorosilicone resin exhibiting a softening point of from 50°C to 250°C and represented by the average formula
(CF₃CH₂CH₂SiO_{3/2})ₙ(SiO_{4/2})ₘ
where the value of n is at least 0.6 but less than 1, the value of m is greater than zero, and n + m = 1.

2. A method for preparing the fluorosilicone resin of Claim 1, said method comprising the sequential steps of
(1) cohydrolyzing an organosilicon compound of the general formula CF₃CH₂CH₂SiX₃, where X represents a halogen atom or an alkoxy group, and an organosilicon compound of the general formula SiX₄ in the presence of organic solvent and an aqueous acid solution;
2) subjecting the resultant fluorosilicone resin solution to a water wash, followed by neutralization and removal of water; and
3) subjecting the product of step (2) to a thermal dehydration by heating said product in the presence of alkali metal catalyst, and
4) washing the product of step (3) with water. followed by neutralization and removal of water to isolate said resin.

3. A method according to claim 2 where the residual silanol groups in the resin obtained in step (4) are reacted with an organosilicon compound of the general formula (R₃Si)ₐY where R represents a substituted or unsubstituted monovalent hydrocarbon group having from 1 to 8 carbon atoms; a is 1 or 2 with the proviso that when a is 1, Y is a hydrogen atom, halogen atom, hydroxyl group, alkoxy group, -NR'₂, -ONR'₂, or -OCOR' and when a is 2, Y is -O- or -NR'-, where R' is a hydrogen atom or an alkyl radical.

## Patentansprüche

1. Thermoplastisches Fluorsiliconharz mit einem Erweichungspunkt von 50°C bis 250°C mit der durchschnittlichen Formel
(CF₃CH₂CH₂SiO_{3/2})ₙ(SiO_{4/2})ₘ,
worin der Wert für n mindestens 0,6, aber weniger als 1 ist, der Wert von m größer als 0 ist und n + m = 1.

2. Verfahren zur Herstellung des Fluorsiliconharzes von Anspruch 1, wobei das Verfahren die aufeinander folgenden Stufen umfaßt, daß man
(1) eine Organosiliciumverbindung der allgemeinen Formel CF₃CH₂CH₂SiX₃, worin X ein Halogenatom oder eine Alkoxygruppe bedeutet, und eine Organosiliciumverbindung der allgemeinen Formel SiX₄ in Gegenwart eines organischen Lösungsmittels und einer wäßrigen sauren Lösung cohydrolysiert;
(2) die entstehende Fluorsiliconharzlösung einem Waschen mit Wasser, anschließend einer Neutralisierung und einer Entfernung des Wassers unterzieht und
(3) das Produkt von Stufe (2) einer thermischen Dehydratisierung durch Erwärmen des Produkts in Gegenwart eines Alkalimetallkatalysators unterzieht und
(4) das Produkt von (3) mit Wasser wäscht und anschließend neutralisiert und das Wasser entfernt, um das Harz zu isolieren.

3. Verfahren nach Anspruch 2, worin die restlichen Silanolgruppen in dem in Stufe (4) erhaltenen Harz mit einer Organosiliciumverbindung der allgemeinen Formel (R₃Si)ₐY umgesetzt werden, worin R eine substituierte oder unsubstituierte monovalente Kohlenwasserstoffgruppe mit 1 bis 8 Kohlenstoffatomen bedeutet; a 1 oder 2 ist, mit dem Vorbehalt, daß dann wenn a 1 ist, Y ein Wasserstoffatom, ein Halogenatom, eine Hydroxylgruppe, eine Alkoxygruppe, -NR'₂, -ONR'₂ oder -OCOR' ist und wenn a 2 ist, Y -O- oder -NR'- ist, wobei R' ein Wasserstoffatom oder ein Alkylrest ist.

## Revendications

1. Une résine de fluorosilicone thermoplastique présentant un point de ramollissement de 50°C à 250°C et représentée par la formule moyenne
(CF₃CH₂CH₂SiO_{3/2})ₙ(SiO_{4/2})ₘ
où la valeur de n est d'au moins 0,6 mais inférieure à 1, la valeur de m est supérieure à zéro, et n + m = 1.

2. Un procédé pour préparer la résine de fluorosilicone de la revendication 1, ledit procédé comprenant les étapes successives suivantes :
1) co-hydrolyser un composé organosilicié de la formule générale CF₃CH₂CH₂SiX₃, où X représente un atome d'halogène ou un groupe alcoxy, et un composé organosilicié de la formule générale SiX₄ en présence d'un solvant organique et d'une solution acide aqueuse ;
2) soumettre la solution de résine de fluorosilicone résultante à un lavage à l'eau, suivi par une neutralisation et une élimination de l'eau ; et
3) soumettre le produit de l'étape (2) à une déshydratation thermique par chauffage dudit produit en présence d'un catalyseur à métal alcalin, et
4) laver le produit de l'étape (3) avec de l'eau, ce qui est suivi d'une neutralisation et d'une élimination de l'eau pour isoler ladite résine.

3. Un procédé selon la revendication 2, dans lequel les groupes silanol résiduels de la résine obtenue dans l'étape (4) sont amenés à réagir avec un composé organosilicié de la formule générale (R₃Si)ₐY où R représente un groupe hydrocarboné monovalent substitué ou non substitué ayant 1 à 8 atomes de carbone ; a est 1 ou 2, avec la condition que si a est 1, Y soit un atome d'hydrogène, un atome d'halogène, un groupe hydroxyle, un groupe alcoxy, -NR'₂, -ONR'₂ ou -OCOR', et si a est 2, Y soit -O- ou -NR'-, où R' est un atome d'hydrogène ou un radical alkyle.
